# EUROPÄISCHE PATENTANMELDUNG

(11) **EP 0 586 879 A1**
(43) Veröffentlichungstag der Anmeldung: **16.03.1994**
(21) Anmeldenummer: 93112544.7
(22) Anmeldetag: 05.08.1993
(51) Int. Cl.: B60B 33/02

(54) **Feststellbare Lenkrolle für verfahrbare Geräte**

(30) Priorität: 09.09.1992 DE 9212138 U
(71) Anmelder: ALBERT SCHULTE SÖHNE GmbH & Co., D-42929 Wermelskirchen (DE)
(72) Erfinder: Lange, Hans-Willi, D-42929 Wermelskirchen (DE)
(74) Vertreter: Ludewig, Karlheinrich, Dipl.-Ing.

(57) **Zusammenfassung**

Die Lenkrolle umfaßt eine das Laufrad lagernde Radgabel (10), deren Gabelrücken (11) über eine Kugellaufschale und Kugelkränze an einem mit dem Gerät verbindbaren Schwenklagerkopf abgestützt ist. Der Gabelrücken, die Kugellaufschale (17) und der Schwenklagerkopf sind zentral von einem axial verschiebbaren, im Lösesinne federbeaufschlagten Stellbolzen (16) durchsetzt, mit dem eine Bremsschwinge (12) zur Sperrung und Freigabe des Laufrades sowie zur Sperrung und Freigabe eines Sperrgliedes für die Schwenkbewegung der Radgabel betätigbar ist. Am Radgabelrücken ist eine zur Laufradachse weisende Zunge (30) angeordnet, auf welche die am Stellbolzen anliegende, aus einer Federlasche gebildete Bremsschwinge (12) aufgesteckt ist.

Zur unverrückbaren lagesicheren Befestigung der als Federlasche ausgebildeten Bremsschwinge am Gabelrücken weist der Gabelrücken wenigstens einen Führungsansatz (31) für die Bremsschwinge auf, die durch eine Umbiegung der Zunge am Gabelrücken gehaltert ist.

## Beschreibung

Die Erfindung betrifft eine feststellbare Lenkrolle für verfahrbare Geräte, mit einer das Laufrad lagernden Radgabel, deren Gabelrücken über eine Kugellaufschale und Kugelkränze an einem mit dem Gerät verbindbaren Schwenklagerkopf abgestützt ist, wobei der Gabelrücken, die Kugellaufschale und der Schwenklagerkopf zentral von einem axial verschiebaren, im Lösesinne federbeaufschlagten Stellbolzen zur Sperrung und Freigabe einer Bremsschwinge des Laufrades sowie zur Sperrung und Freigabe eines Sperrgliedes für die Schwenkbewegung der Radgabel durchsetzt ist, wobei am Gabelrücken eine etwa zur Laufradachse weisende Zunge angeordnet ist, auf welche die am Stellbolzen anliegende, aus einer Federlasche gebildete Bremsschwinge aufgesteckt ist.

Aus der DE 40 29 299 A1 ist eine Lenkrolle der vorgenannten Art bekannt, bei welcher die auf die Zunge aufgesteckte federnde Bremsschwinge durch ein diese übergreifendes ebenfalls auf die Zunge aufgestecktes Klemmglied lagegesichert ist. Dieses Klemmglied stellt jedoch einen zusätzlichen Bauteil dar, der überdies zur Erzielung seiner Klemmwirkung einen maßhaltigen die Zunge übergreifenden Ausschnitt aufweisen muß.

Aufgabe der Erfindung ist, es die als Federlasche-ausgebildete Bremsschwinge an ihrer Befestigungsstelle unverrückbar und lagesicher am Gabelrücken zu haltern.

Diese Aufgabe ist dadurch gelöst, daß der Gabelrücken wenigstens einen Führungsansatz zur Lagesicherung der Bremsschwinge aufweist, die durch Umbiegung der Zunge am Gabelrücken gehaltert ist. Dadurch kann ein besonderer Klemmteil zur Festlegung der Bremsschwinge an der Zunge des Gabelrückens entfallen.

Nach einem Ausgestaltungsmerkmal der Erfindung ist es zur Lagesicherung der Bremsschwinge an der Radgabel vorteilhaft, den Führungsansatz zu bilden, in dem beiderseits neben der aus dem Radgabelrücken ausgebogenen und mit dieser einstückig verbundenen Zunge jeweils ein Führungszapfen aus dem Radgabelrücken ausgeprägt ist, wobei jeder Führungszapfen von einer Ausnehmung der Bremsschwinge schließend umfaßt ist. Dabei können die Führungszapfen im einfachsten Fall einen Kreisquerschnitt aufweisen und die Ausnehmungen in der Bremsschwinge von kreisrunden Löchern gebildet sein, welche den jeweiligen Führungszapfen spielfrei umgreifen.

Obschon es denkbar ist, den unterhalb der Bremsschwinge befindlichen Teil der Zunge zur Außenseite des Gabelrückens hin abzubiegen, ist es gegebenenfalls zur Versteifung der als Federlasche ausgebildeten Bremsschwinge vorteilhaft, den abgebogenen Zungenteil zum Zentrum des Radgabelrückens zu richten.

Falls die Bremsschwinge eine ihre Versteifung dienende Längssicke in ihrem mittlerem Abschnitt im Befestigungsbereich aufweist, läßt sich die Halterung der Bremsschwinge vorzugsweise dadurch bewerkstelligen, daß der abgebogene Zungenteil in seinem mittleren Bereich einen in Längsrichtung verlaufenden und den Zungenteil in zwei Längsstreifen unterteilenden Freischnitt aufweist, und die Längsstreifen des Zungenteiles die Längssicke der Bremsschwinge zwischen sich einschließen.

Statt der Führungszapfen ist es auch denkbar, als Führungsansatz beiderseits neben der Bremsschwinge Anlagerippen zu verwenden, welche die Bremsschwinge schließend umfassen.

Die Erfindung ist beispielsweise auf er Zeichnung dargestellt und wird nachfolgend näher erläutert. Es zeigen:
- Fig. 1: die erfindungsgemäße Lenkrolle in einem in Fig.2 angedeuteten Längsschnitt nach der Linie I-I, deren Bremsmechanismus sich im gelösten Zustand befindet,
- Fig. 2: eine Untersicht der am Radgabelrücken befestigten Bremsschwinge in einem Schnitt durch die Lenkrolle nach der Linie II-II von Fig.1
Die Lenkrolle weist eine das Laufrad lagernde Radgabel 10 auf, an deren Radgabelrücken 11 unterseitig eine Bremschwinge 12 zur Festlegung des Laufrades angeordnet ist. Diese Bremsschwinge 12 ist aus einem vom Laufrad wegfedernden Stahlband gebildet, welches einen horizontalen Befestigungsabschnitt 13 und einen sich daran anschließenden Neigungsabschnitt 14 aufweist. Dieser Neigungsabschnitt 14 der Bremsschwinge 12 stützt sich an seinem freien Ende am kugeligen Kopf einer Hutmutter 15 ab, die einstellbar auf das Unterende eines Stellbolzens 16 gesichert aufgeschraubt ist. Auf die Oberseite des Gabelrückens 11 ist eine topfförmige Kugellaufschale 17 aufgesetzt, an deren, den Gabelrücken 11 überragendem Rand, Laufringe zur Bildung von Kugelkränzen 18 und 19 angeformt sind. Im Zentrum dieser Kugellaufschale 17 und in dem darunterliegenden Gabelrücken 11 befindet sich eine Durchgangsbohrung 20 für den Stellbolzen 16. Im Topfboden der Kugellaufschale 17 sind auf einem konzentrisch zur Durchgangsbohrung 20 angeordneten Umfang drei Gewindelöcher vorhanden, in welche dem Gabelrücken 11 an der Kugellaufschale 15 festlegende Befestigungsschraube 21 eingedreht sind. Unterhalb des Radgabelrückens 11 ist eine Formschlußplatte 22 mit Hilfe der Befestigungsschrauben 21 festgelegt, an welcher ein Führungskragen 24 für einen am Stellbolzen 16 festgelegten Ringansatz 23 angeordnet ist. In seinem oberen Bereich ist der Stellbolzen 16 als Vierkantabschnitt 25 ausgebildet, der das Zentrum einer Befestigungsplatte 26 formschlüssig durchdringt und die Befestigungsplatte 26 nach oben hin überragt. In diese über der Kugellaufschale angeordnete Befestigungsplatte ist ein Kugellaufring für den Kugelkranz 18 eingepreßt. Zur axialen Sicherung der Kugellaufschale 17 an der Befestigungsplatte 26 ist mit dieser Lagerkragen 27 beispielsweise durch Vernietung verbunden. Das Unterende dieses Lagerkragens 27 untergreift zur Bildung des Kugelkranzes 19 den diesem zugehörigen Laufring der Kugellaufschale 17. Durch die beiden Kugelkränze sind die Kugellaufschale 17 und die Befestigungsplatte 26 gegeneinander drehbar, jedoch in axialer Richtung aneinander festgelegt.

Der Ringansatz 23 bildet an seiner Oberseite einen Anschlag, an welchem ein von einer Druckfeder 28 beaufschlagtes, als Scheibe ausgebildetes Sperrglied 29 anliegt. Dieses Sperrglied 29 kann bei in Bremsstellung überführtem Stellbolzen 16 in die Formschlußplatte 22 eingreifen und verhindert bei Andrucklage der Bremschwinge 12 am Laufrad auch eine Schwenkbewegung der Radgäbel 10 gegenüber der Befestigungsplatte 26.

Die Bremsschwinge 12 ist mit ihrem horizontal verlaufenden Befestigungsabschnitt 13 auf eine aus dem Gabelrücken 11 nach unten austretende Zunge 30 aufgesteckt und weist zu diesem Zweck einer dem Querschnitt der Zunge entsprechende Ausnehmung auf. Diese Zunge 30 läßt sich am Gabelrücken 11 leicht bilden, indem der sich zwischen zwei Einschnitten befindliche Blechabschnitt rechtwinklig nach unten abgebogen ist. Im Bereich des Befestigungsabschnitts 13 der Bremsschwinge 12 befindet sich ein Führungsansatz 31, der bei der aus der Zeichnung ersichtlichen Ausführungsform aus einem jeweils neben der Zunge aus dem Radgabelrücken 11 ausgeprägten Führungszapfen 32 besteht. Diese Führungszapfen 32 werden von Ausnehmungen 33 im Befestigungsabschnitt 13 der Bremsschwinge 12 spielfrei übergriffen.

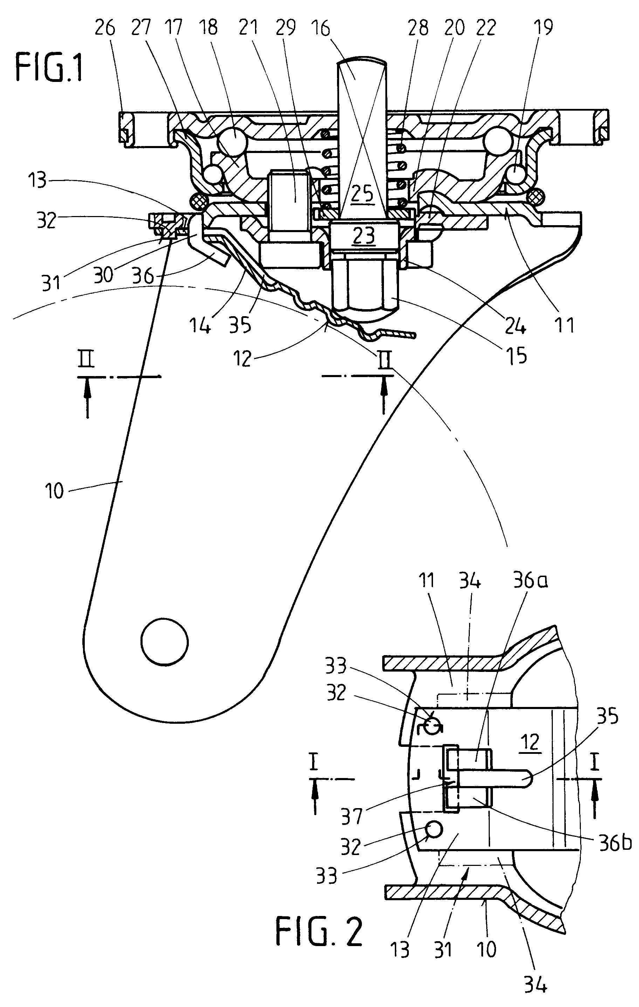

Statt der vorbeschriebenen Ausbildung des Führungsansatzes 31 kann dieser auch, wie in Fig. 2 in strichpunktierten Linien angedeutet, auch aus Anlagerippen 34 gebildet sein, welche seitlich am Befestigungsabschnitt 13 der Bremsschwinge 12 schließend anliegen und diesen gegebenenfalls übergreifen. An den Übergangsbereich des Befestigungsabschnitt 13 schließt sich im Neigungsabschnitt 14 eine Längssicke 35 an. Der abgebogene Zungenteil 36 ist durch einen Freischnitt 37 in zwei Längsstreifen 36a und 36b unterteilt, die sich beiderseits der Längssicke 35 nach dem Abbiegen an den Neigungsabschnitt 14 der Bremsschwinge 12 anlegen.

Wie bereits erwähnt, gibt die vorbeschriebene Ausführungsform den Erfindungsgegenstand nur beispielsweise wieder, der keinesfalls allein darauf beschränkt ist. Es sind vielmehr noch mancherlei andere Ausgestaltungen und Änderungen des Erfindungsgegenstandes denkbar.

| **BEZUGSZEICHEHLISTE:** | | | |
|---|---|---|---|
| 10 | Radgabel | 34 | Anlagerippe |
| 11 | Radgabelrücken | 35 | Längssicke |
| 12 | Bremsschwinge | 36 | Zungenteil |
| 13 | Befestigungsabschnitt | 36a | Längsstreifen |
| 14 | Neigungsabschnitt | 36b | Längsstreifen |
| 15 | Hutmutter | 37 | Freischnitt |
| 16 | Stellbolzen | | |
| 17 | Kugellaufschale | | |
| 18 | Kugelkranz | | |
| 19 | Kugelkranz | | |
| 20 | Durchgangsbohrung | | |
| 21 | Befestigungsschraube | | |
| 22 | Formschlußplatte | | |
| 23 | Ringansatz | | |
| 24 | Führungskragen | | |
| 25 | Vierkantabschnitt | | |
| 26 | Befestigungsplatte | | |
| 27 | Lagerkragen | | |
| 28 | Druckfeder | | |
| 29 | Sperrglied | | |
| 30 | Zunge | | |
| 31 | Führungsansatz | | |
| 32 | Führungszapfen | | |
| 33 | Ausnehmung | | |

## Patentansprüche

1. Feststellbare Lenkrolle für verfahrbare Geräte, mit einer das Laufrad lagernden Radgabel, deren Gabelrücken über eine Kugellaufschale und Kugelkränze an einem mit dem Gerät verbindbaren Schwenklagerkopf angestützt ist, wobei der Gabelrücken, die Kugellaufschale und der Schwenklagerkopf zentral von einem axial verschiebbaren, im Lösesinne federbeaufschlagten Stellbolzen zur Sperrung und Freigabe einer Bremsschwinge des Laufrades sowie zur Sperrung und Freigabe eines Sperrgliedes für die Schwenkbewegung der Radgabel durchsetzt ist, wobei am Gabelrücken eine etwa zur Laufradachse weisende Zunge angeordnet ist, auf welche die am Stellbolzen anliegende, aus einer Federlasche gebildete Bremsschwinge aufgesteckt ist,
**dadurch gekennzeichnet,**
daß der Gabelrücken (11) wenigstens einen Führungsansatz (31) zur Lagesicherung der Bremsschwinge (12) aufweist, die durch Umbiegung der Zunge (30) am Gabelrücken (11) gehaltert ist.

2. Lenkrolle nach Anspruch 1, dadurch gekennzeichent, daß als Führungsansatz (31) der aus dem Radgabelrücken (11) ausgebogenen und mit diesem einstückig verbundenen Zunge (30) jeweils ein Führungszapfen (32) aus dem Radgabelrücken (11) ausgeprägt ist, und jeder Führungszapfen (32) von einer Ausnehmung (33) der Bremsschwinge (12) schließend umfaßt ist.

3. Lenkrolle nach Anspruch 1 und/oder 2, dadurch gekennzeichnet, daß die Führungszapfen (32) einen Kreisquerschnitt aufweisen und die Ausnehmungen (33) in der Bremsschwinge (12) von kreisrunden Löchern gebildet sind.

4. Lenkrolle nach einem oder mehreren der vorhergehenden Ansprüche, dadurch gekennzeichnet, daß der abgebogene Zungenteil (36) zum Zentrum des Radgabelrückens (11) gerichtet ist.

5. Lenkrolle nach einem oder mehreren der vorhergenden Ansprüche, dadurch gekennzeichnet, daß der abgebogene Zungenteil (36) in seinem mitteleren Bereich einen in Längsrichtung verlaufenden und den Zungenteil (36) in zwei Längsstreifen (36a, 36b) unterteilenden Freischnitt (37) aufweist, und die Längsstreifen (36a, 36b) des Zungenteiles (36) eine Längssicke (35) der Bremsschwinge (12) zwischen sich einschließen.

6. Lenkrolle nach einem oder mehreren der Ansprüche 1, 4 und 5, dadurch gekennzeichnet, daß als Führungsansatz (31) beiderseits neben der Bremsschwinge (12) Anlagerippen (34) angeordnet sind, welche die Bremsschwinge (12) schließend umfassen.
